Europäisches Patentamt

European Patent Office

Office européen des brevets

(19)

(11) **EP 1 464 997 A1**

(12) **EUROPEAN PATENT APPLICATION**

(43) Date of publication:
**06.10.2004 Bulletin 2004/41**

(51) Int Cl.$^7$: **G02B 6/12**

(21) Application number: **03100909.5**

(22) Date of filing: **04.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **ThreeFive Photonics B.V.**
**3994 DA Houten (NL)**

(72) Inventor: **STULEMEIJER, Jiri**
**3701 JP, ZEIST (NL)**

(74) Representative: **Aalbers, Arnt Reinier et al**
**De Vries & Metman**
**Overschiestraat 180**
**1062 XK Amsterdam (NL)**

(54) **Integrated optical device comprising a bend waveguide**

(57)    The invention pertains to an integrated optical device (1) comprising at least one optical waveguide (3) for interconnecting optical components or connecting an optical component to an input or output, which waveguide (3) comprises a bend section (8). The bend section (8) comprises at least a first subsection (10) having a variable radius of curvature (Rv1), which decreases along the length of the first subsection (10). With the invention, losses in the bend are reduced.

Fig.2

**Description**

The invention pertains to an integrated optical device comprising at least one optical waveguide for interconnecting optical components or connecting an optical component to an input or output, which waveguide comprises a bend section.

In European patent application 347 233, it is stated that a fundamental consideration in the design of integrated optical circuits is the packing density of components on a substrate. This is limited principally by the angles through which waveguides may be turned in order to access each component. EP 347 233 attempts to provide a waveguide structure capable of handling large angle bends without unacceptable power losses and does so by providing an integrated optic device comprising an optical waveguide having a bend and a waveguide section at the bend capable of supporting more than one waveguide mode at the operating frequency. The embodiment in Figure 6 of EP 347 233 includes a waveguide (numeral 18) which comprises a multi-moded section (19), the outer and inner bounds (20) and (21) of which are both curved the radius of curvature of the outer bound (20) being smaller than that of the inner bound (21).

M. Popovic et al. "Air Trenches for Sharp Silica Waveguide Bends", Journal of lightwave technology, Volume 20, no. 9, September 2002, pages 1762-1772 relates to air trench structures for reduced-size bends in low index contrast waveguides. To minimize junction loss, the structures are designed to provide adiabatic mode shaping between low- and high-contrast regions, which is achieved by the introduction of "cladding tapers". A similar structure is disclosed in international patent application WO 02/33457.

It is an object of the present invention to improve the device described in the first paragraph.

To this end, the device according to the invention is characterized in that the bend section comprises at least a first subsection having a variable radius of curvature, which radius decreases, in the propagation direction, along the length of the first subsection.

It appeared that bend losses can thus be (further) reduced.

Especially when the waveguide comprises large angle bends, it is preferred that the bend section comprises a second subsection having a variable radius of curvature, which increases, in the propagation direction, along the length of this second subsection. The angle bend can be extended even further, e.g. to 90° or more, by interconnecting the first and second subsections by means of a third subsection having a substantially constant radius of curvature.

In order to enhance the loss reduction, it is preferred that at least one and preferably all of the subsections follows a path such that, at the operating frequency or frequencies, the sum of the contributions of the guided modes in the first and/or second subsection to the first mode in a radiation field is as small as possible, e. g. less than 1 dB, preferably less than 0.1 dB, preferably less than 0.01 dB. In calculations, said first mode of a radiation field can be represented as a mode one order higher than the highest guided mode. For instance, in a single mode waveguide, guiding only the fundamental mode, the said first mode in a radiation field would be represented by a fictitious first order mode of the waveguide.

The said sum of the contributions can be calculated by means of generally known methods e.g. by numerically solving equation (5.2) in paragraph 5.6.4 in conjunction with Appendix A of J. Stulemeijer "Integrated Optics for Microwave Phased-Array Antennas", Ph. D. Thesis Delft University of Technology, 2002.

Preferably, the variation in the radius of curvature is such that the coupling coefficient between the guided mode or modes and the first mode in the radiation field is at least substantially constant over the greater part of the first and/or second subsection. In that case, it is preferred that the length of the first and/or the second subsection, is equal to NxB or differs less than 10%, preferably less than 5% from NxB, where 'N' is an integer (1,2,3,...) and 'B' is the beat length.

The beat length between an i-order mode and j-order mode is generally defined as the length at which the phase difference between these modes is 2n. The beat length is calculated by dividing the wavelength by the difference between the effective refractive index of each of the individual modes.

The advantages of the present invention will be more pronounced if the said integer 'N' is equal to or smaller than 5, preferably equal to or smaller than 3.

A practical way of approaching the above criteria, is by selecting a shape of the first and/or second subsections which varies at least substantially linearly with the reciprocal of the radius of the curvature (1/R).

The invention will now be explained in more detail with reference to the drawings, which contain two preferred embodiments of the device according to the present invention.

Figure 1 shows a partial cross-section of an integrated optical device.

Figure 2 is a top plan view of a first embodiment according to the present invention.

Figure 3 is a top plan view of a second embodiment according to the present invention.

Identical features and features having the same function or substantially the same function will be denoted by means of the same numeral.

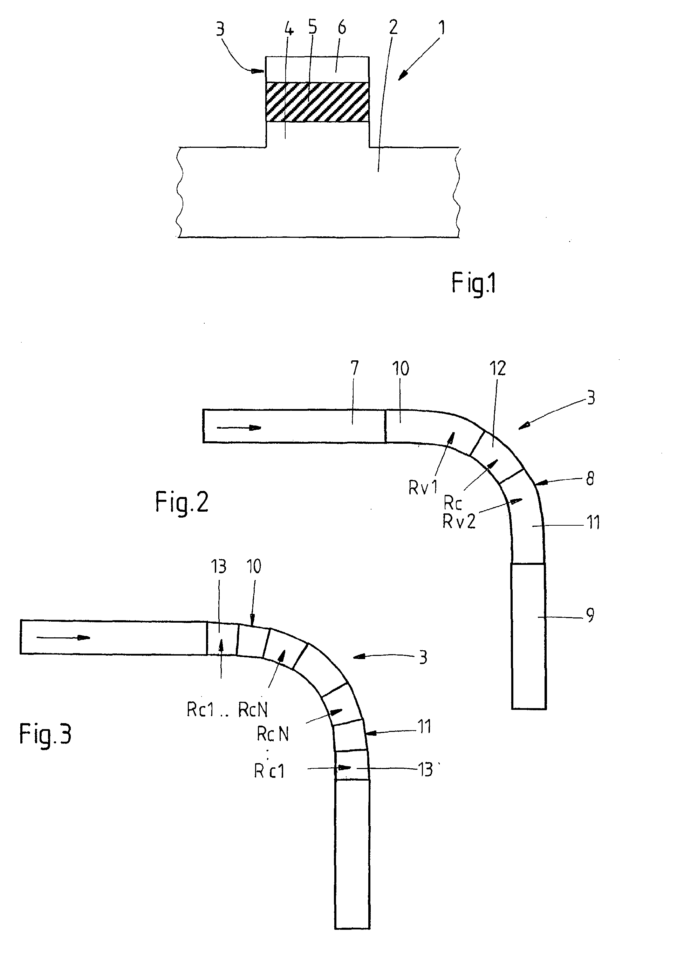

Figure 1 shows a partial cross-section of an integrated optical device 1 comprising a (Indium Phosphide) InP substrate 2 onto which optical components (not shown), such as Arrayed Waveguide Gratings (AWGs) and Spot Size Converters (SSC), and at least one waveguide ridge 3 for optically interconnecting the optical component have been formed. In this particular example, the waveguide 3 has a height of 0,9 µm and a width in a range from 3 μm and comprises a InP lower cladding layer 4, which is an integral part of the substrate 2, a core layer 5 of InGaAsP quarternary having a bandgap wavelength of 1,3 μm and having a height of 600 nm, and a top InP cladding layer 6 having a height of 300 nm. The operating wavelength for which this particular device has been designed is 1,55 μm.

In a first embodiment, shown in Figure 1, the waveguide 3 comprises, seen in the propagation direction (indicated by an arrow), a first straight waveguide section 7, a bend section 8 extending over a bend angle of 90°, and a second straight waveguide section 9. The bend section 8 comprises a first subsection 10 having a variable radius of curvature (Rv1), which decreases in the propagation direction along the length of the first subsection, linearly with the reciprocal of the radius of curvature (Rv1). More particularly, the radius of curvature decreases in accordance with the following equation (1):

$$1 / Rv1(x) = x /(L \times R) \qquad (1)$$

where 'x' is a coordinate along the central axis of the first subsection 10 (x=0 at the transition between the first straight section 7 and the first subsection 10), 'L' is the total length of the subsection 10, and 'R' is the radius of curvature at the end of the first subsection 10.

The bend section 8 further comprises a second subsection 11 having a variable radius of curvature (Rv2), which radius increases, in the propagation, along the length of this second subsection, again linearly with the reciprocal of the radius of curvature (Rv2). More particularly, the radius of curvature increases in accordance with the following equation (2):

$$1 / Rv2(x)= (L - x) /(L \times R) \qquad (2)$$

where 'x' is a coordinate along the central axis of the second subsection 11, 'L' is the total length of the second subsection 11, and 'R' is the radius of curvature at the beginning (seen in the propagation direction) of the second subsection 11.

The first and second subsections are interconnected by a third subsection 12 having a substantially constant radius of curvature (Rc) and interconnecting the first and second subsections 10, 11. In the above equations (1) and (2), R equals Rc.

In this example, the length, 'L', of both first subsection 10 and the second subsection 11 is equal to the beat length (N=1) between the fundamental and first order mode, which in this configuration amounts to 56 μm.

From measurements, it appeared that losses in the bend section were, at the operating wavelength of less than 0.1 dB / 90°.

A second embodiment, shown in Figure 3, differs from the first embodiment in that the first and the second subsections 10, 11 each comprise a plurality of segments 13, e.g. three segments, having an constant and mutually different radius of curvature (Rc1 .. RcN). The radius of curvature (Rc1 .. RcN) at the centre of each segment 13 in the first and second subsections 10, 11 decreases respectively increases in the propagation direction along the length of these subsections, linearly with the reciprocal of the radius of curvature. On the one hand, the reduction of bend losses in this second embodiment is slightly less than that of the first embodiment. On the other hand, the corresponding mask design used for etching this second embodiment is less complicated.

The invention is especially suitable for reducing losses in waveguides comprising bend sections having a large angle bend, e.g. in excess of 15°, and/or a small effective radius of curvature. Whether an effective radius qualifies as small, depends on the materials used, in particular of the refractive index of such material, and on the dimensions of a particular device. For relatively high contrast InP devices radii of less than 500 μm, preferably less than 250 μm are generally considered to be small. For relatively low contrast silica on silicon devices radii of less than 2000 μm, preferably less than 1000 μm are generally considered to be small.

The invention is not restricted to the above described embodiments which can be varied in a number of ways within the scope of the claims.

**Claims**

1. Integrated optical device (1) comprising at least one optical waveguide (3) for interconnecting optical components or connecting an optical component to an input or output, which waveguide (3) comprises a bend section (8), **characterised in that** the bend section (8) comprises at least a first subsection (10) having a variable radius of curvature (Rv1) , which decreases along the length of the first subsection (10).

2. Integrated optical device (1) according to claim 1, wherein the bend section (8) comprises a second subsection (11) having a variable radius of curvature (Rv2), which increases along the length of this second subsection (11).

3. Integrated optical device (1) according to claim 1 or 2, wherein, at the operating frequency or frequencies, the sum of the contributions of the guided modes in the first and/or second subsection (10, 11) to the first mode in a radiation field is less than 1 dB, preferably less than 0.1 dB, preferably less than 0.01 dB.

4. Integrated optical device (1) according to any one of the preceding claims, wherein the variation in the radius of curvature (Rv1, Rv2) is such that the coupling coefficient between the guided mode or modes and the first mode in the radiation field is at least substantially constant over the greater part of the first and/or second subsection (10, 11).

5. Integrated optical device (1) according to any one of the preceding claims, wherein the length of the first and/or the second subsection (10, 11) is equal to NxB or differs less than 10%, preferably less than 5% from NxB, where 'N' is an integer (1,2,3,...) and 'B' is the beat length.

6. Integrated optical device (1) according to claim 5, wherein the said integer is equal to or smaller than 5, preferably equal to or smaller than 3.

7. Integrated optical device (1) according any one of the preceding claims, wherein the shape of the first and/or second subsections (10, 11) varies substantially linearly with the reciprocal of the radius of curvature (1/R).

8. Integrated optical device (1) according to any one of the claims 2-7, wherein the first and second subsections (10, 11) are (optically) interconnected by a third subsection (12) having a substantially constant radius of curvature (Rc).

9. Integrated optical device (1) according to any one of the preceding claims, wherein the first and/or the second subsection (10, 11) comprise a plurality of segments (13) having an at least substantially constant radius of curvature.

10. Integrated optical device (1) according to any one of the preceding claims, wherein the effective radius of curvature of the total bend section (8) is less than 1000 μm, preferably less than 500 μm, preferably less than 250 μm.

11. Integrated optical device (1) according to any one of the preceding claims, wherein the entire waveguide (3), at the operating frequency or frequencies, is a single mode waveguide (3).

Fig.1

Fig.2

Fig.3

EP 1 464 997 A1

**European Patent Office**

**EUROPEAN SEARCH REPORT**

Application Number

EP 03 10 0909

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 645 649 A (SIEMENS AG) 29 March 1995 (1995-03-29) | 1,2,8,11 | G02B6/12 |
| A | * abstract * * column 1, line 50 - column 5, paragraph 2 * * figures 1-3 * | 3,10 | |
| X | A. KUMAR AND S. ADITYA: "Performance of S-bends for integrated-optic waveguides" MICROW. OPT. TECHNOL. LETT., vol. 19, no. 4, November 1998 (1998-11), pages 289-292, XP008020523 USA | 1-3,11 | |
| A | * abstract * * page 290, left-hand column, paragraph 1 - page 291, left-hand column, last paragraph * * figures 2,3; table 1 * | 5,6 | |
| X | KOAI K T ET AL: "MODELING OF TI: LINBO3 WAVEGUIDE DEVICES: PART II-S-SHAPED CHANNEL WAVEGUIDE BENDS" JOURNAL OF LIGHTWAVE TECHNOLOGY, IEEE. NEW YORK, US, vol. 7, no. 7, 1 July 1989 (1989-07-01), pages 1016-1022, XP000053504 ISSN: 0733-8724 * abstract * Section IV * page 1019 - page 1020 * * figures 1,7,8A-C * | 1-4,11 | TECHNICAL FIELDS SEARCHED (Int.Cl.7) G02B |

-/--

The present search report has been drawn up for all claims

| Place of search | Date of completion of the search | Examiner |
|---|---|---|
| BERLIN | 8 August 2003 | Moroz, A |

European Patent Office

**EUROPEAN SEARCH REPORT**

Application Number

EP 03 10 0909

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1998, no. 01, 30 January 1998 (1998-01-30) -& JP 09 243842 A (SUMITOMO ELECTRIC IND LTD), 19 September 1997 (1997-09-19) | 1,9 | |
| A | * abstract * * paragraphs [0019],[0021] * | 10 | |
| X | US 5 524 165 A (LABEYE PIERRE  ET AL) 4 June 1996 (1996-06-04) | 1-3 | |
| A | * abstract * * column 4, line 10 - column 6, line 35 * * column 7, line 59 - column 8, line 23 * * figures 1,9,10 * | 5-7 | |
| A | JOHNSON L.M. AND F.J. LEONBERGER: "Low-loss LiNbO3 waveguide bends with coherent coupling" OPTICS LETTERS, vol. 8, no. 2, February 1983 (1983-02), pages 111-113, XP002250703 * abstract * * page 111, left-hand column, paragraph 2 * * page 111, right-hand column, last paragraph - page 113, left-hand column, paragraph 1 * * figures 1-5 * | 5,6,9 | TECHNICAL FIELDS SEARCHED      (Int.Cl.7) |

The present search report has been drawn up for all claims

| Place of search | Date of completion of the search | Examiner |
|---|---|---|
| BERLIN | 8 August 2003 | Moroz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 10 0909

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2003

| Patent document cited in search report | | Publication date | Patent family member(s) | | Publication date |
|---|---|---|---|---|---|
| EP 0645649 | A | 29-03-1995 | EP<br>JP | 0645649 A2<br>7159635 A | 29-03-1995<br>23-06-1995 |
| JP 09243842 | A | 19-09-1997 | NONE | | |
| US 5524165 | A | 04-06-1996 | FR<br>EP<br>JP | 2715232 A1<br>0668517 A1<br>8036114 A | 21-07-1995<br>23-08-1995<br>06-02-1996 |

EPO FORM P0459

For more details about this annex : see Official Journal of the European Patent Office, No. 12/82